# EUROPÄISCHE PATENTSCHRIFT

(11) **EP 0 533 986 B1**
(45) Veröffentlichungstag und Bekanntmachung des Hinweises auf die Patenterteilung: **21.02.1996**
(21) Anmeldenummer: 91116532.2
(22) Anmeldetag: 27.09.1991
(51) Int. Cl.: B60B 30/06

(54) **Verfahren zum Verbinden eines rotierbaren Montiertellers mit einem rotierbaren Zapfen eines Reifenmontiergeräts sowie komplettes Reifenmontiergerät und Reifenmontierteller**
Method for fixing a rotating mounting table to a rotating shaft of a tyre changing apparatus and a mounting table for a tyre changing apparatus
Système de fixation d'un plateau de montage tournant sur un arbre tournant d'un appareil de montage des pneumatiques et un plateau de montage d'un tel appareil

(43) Veröffentlichungstag der Anmeldung: 31.03.1993
(73) Patentinhaber: SCHENCK-AUTO-SERVICE-GERAETE GmbH, D-64293 Darmstadt (DE)
(72) Erfinder: Steinbeck, Horst, W-6112 Gross-Zimmern (DE); Feith, Johann, W-6054 Rödermärk (DE)
(74) Vertreter: Brandt, Ernst-Ulrich, Dipl.-Phys., Dipl.-Ing.

(56) Entgegenhaltungen:
- EP-A- 0 001 855
- EP-A- 0 169 255
- BE-A- 664 142
- DE-B- 1 176 069
- US-A- 3 474 840
- US-A- 3 580 320

## Beschreibung

Die Erfindung betrifft ein Verfahren zur Montage oder Demontage von Kraftfahrzeugfelgen auf einem Reifenmontiergerät unter Verwendung eines mit einem rotierbaren Antriebselement des Reifenmontiergeräts drehfest verbindbaren Montiertellers, auf dem die Kraftfahrzeugfelgen gehalten werden, bei dem der Montierteller und das Antriebselement über eine Schiebeverbindung lösbar verbunden werden, sowie einen rotierbaren Montierteller mit einer Halterung für Kraftfahrzeugfelgen zur Montage von Reifen oder deren Demontage und ein Reifenmontiergerät mit einem demontierbaren, rotierbaren Montierteller.

Durch den Prospekt "Reifen Montieren mit Schenck A-S-G - Technik, die im Trend liegt" vom April 1991 der Schenck Auto-Service-Geräte GmbH, ist ein Reifenmontiergerät bekanntgeworden, bei welchem auf einem rotierbaren Montierteller radial verschiebbar und pneumatisch betätigbare Halterungen dargestellt werden, welche zum Montieren eines Reifens auf eine Fahrzeugfelge die eine Seite der Felge an deren einem Felgenhorn umgreifen und selbst zentrierend die Felge festhalten, so daß mit Hilfe eines an einem Montierarm angeordneten Montierkopfs die eine Reifenseite beim Montieren hinter das freie umlaufende Felgenhorn gebracht werden kann und nach Wenden des hälftig montierten Reifens und erneutem Festspannen der Felge mittels der Halterungen die andere Reifenseite ebenfalls hinter das dann freie Felgenhorn mit Hilfe des Montierkopfes durch Rotieren des Rotiertellers gegenüber dem feststehenden Montierkopf komplett auf die Felge aufgezogen werden kann. Anschließend werden die die Felge am Felgenhorn haltenden Halterungen entspannt, so daß das komplett montierte Rad vom Reifenmontiergerät genommen werden kann und der Reifen mit dem entsprechenden Betriebsluftdruck versehen werden kann. Bei der Demontage wird in entgegengesetzter Reihenfolge zunächt die eine Reifenseite und dann die andere Reifenseite über das entsprechende umlaufende Felgenhorn gehoben und freigegeben.

Derartige Reifenmontiergeräte sind für Stahlfelgen jederzeit einsetzbar und praktikabel, werden aber auch dort bei Felgen mit großem Felgenhorndurchmesser sehr aufwendig, da die insbesondere pneumatisch betätigbaren Halterungen oder Spannpratzen zufolge ihrer Erstreckung über den Montierteller hinaus hinderlich beim Montieren und Demontieren der Reifen werden, so daß eine beliebige Vergrößerung der Montierteller nur unter sehr großem Aufwand durchführbar ist. Aufgrund dieser Tatsache wurden bereits für große LKW-Räder Montier- und Demontiereinrichtungen geschaffen, bei welchen die Achse des Montiertellers auf dem Reifenmontiergerät nicht in vertikaler, sondern in horizontaler Richtung ausgerichtet ist.

Werden nun anstelle von Stahlfelgen Felgen aus Leichtmetallegierungen verwendet, die gegebenenfalls poliert und lackiert sind und werden auf diese Felgen Niederquerschnittreifen montiert, so werden zum einen die Kräfte an den umlaufenden Felgenhörnern bei Erhöhung der Breite der Felge, beispielsweise für Niederquerschnittreifen, beachtlich erhöht, was zu einer wesentlichen Steigerung der Anpresskraft führt. Darüber hinaus besteht die Gefahr, daß zufolge der glatten Oberfläche der Felge ein Durchrutschen der festgespannten Felge an den Spannpratzen nicht immer vermieden werden kann, da die beim Montieren des Reifens über das freie umlaufende Felgenhorn mit Hilfe des Montierkopfs auftretenden Kräfte kurzzeitig zu groß werden. Damit ist eine Beschädigung oder eine Zerstörung der hochwertigen Felgen nicht auszuschließen. Ähnliche Probleme treten bei derartigen Felgen aus Leichtmetallegierungen, die gegossen oder geschmiedet sein können, auch dann auf, wenn anstelle eines Spannens von außen nach innen ein Spannen von innen nach außen erfolgt.

Auch Motorradfelgen, die aus Leitmetallegierungen bestehen und die bisher ebenfalls durch Spannpratzen gespannt wurden (vgl. hierzu das Europäische Patent 1 69 255), können bei zunehmender Reifengröße durch die Spannpratzen beschädigt werden. Darüber hinaus sollte insgesamt vermieden werden, die Reifenschulter oder das umlaufende Felgenhorn einer Felge zu beschädigen, da hierdurch Folgeschäden an neuen zu montierenden Reifen auftreten können, und es ist nicht auszuschließen, daß hierdurch die Ursache geschaffen wird, daß der vorgeschriebene Betriebsluftdruck unkontrolliert reduziert wird.

Aus der US-A-3,474,840 ist ein Reifenmontiergerät bekannt, das einen mit einem rotierbaren Antriebselement des Reifenmontiergeräts drehfest verbindbaren Montierteller aufweist. Der Montierteller weist eine Vielzahl von über dem Montierteller verteilten Aufnahmebohrungen auf. In drei dieser Aufnahmebohrungen werden Befestigungsbolzen eingeschraubt, die zugeordnete Löcher für Radbefestigungsbolzen in der Felge durchgreifen und über deren Konusflächen die Felge auf dem Montierteller befestigt wird. Die drei Befestigungsbolzen bewirken ein Zentrieren und Befestigen bestimmter Felgengrößen.

Zwar ist ein Durchrutschen der Felgen auf dem Montierteller und ein Beschädigen der Felgenschulter sicher verhindert, jedoch ist bei diesem Montierteller trotz einer Vielzahl von Aufnahmebohrungen stets nur eine Befestigung bestimmter Felgen möglich.

Die der Erfindung zugrundeliegende Aufgabe besteht darin, die Montage bzw. Demontage von Reifen auf Kraftfahrzeugfelgen aus verschiedenem Material, verschiedenster Gestalt, verschiedensten Durchmessers und verschiedendster Breite ohne Einschränkung auf einen maximal möglichen Spannbackendurchmesser und ohne die Gefahr einer Beschädigung der Felge oder einer Felgenschulter und unabhängig von der Lage der Felge zu ermöglichen. Diese Aufgabe wird erfindungsgemäß durch die kennzeichnenden Merkmale des Verfahrensanspruchs gelöst.

Gemäß der Erfindung wird der bisherige Verfahrensschritt Zentrieren und Festpressen der Felge auf dem Montierteller in zwei Verfahrensschritte, nämlich konzentrisches Haltender Felge mit einer Halteeinrichtung zum einen und Lagefixierung der Felge auf dem Montierteller mit zumindest einer Mitnahmeeinrichtung zum anderen aufgeteilt, wobei zu dieser Lagefixierung zwei unterschiedliche Mitnahmeeinrichtungen angeboten werden. Die Fixierung der Lage der Felge auf dem Montierteller kann zum Beispiel mittels verschiedener Sätze von Aufnahmebohrungen für Mitnehmerzapfen, die die Löcher für die Radbefestigungsbolzen durchgreifen, erfolgen, oder mittels einer radial nach außen weisenden Reihe von Aufnahmebohrungen für einen Mitnehmerzapfen, der eine Öffnung in der Felgenschüssel durchgreift. Mit der Erfindung ist ein Reifenmontiergerät geschaffen, bei dem leicht auswechselbare Montierteller auf äußerst einfache Art an die unterschiedlichsten Felgenformen und -größen angepaßt weden können, das also universell einsetzbar ist.

Mit den Merkmalen des Anspruchs 2 wird ein Reifenmontiergerät mit von diesem lösbaren Montierteller unter Schutz gestellt, das sich dadurch auszeichnet, daß zwischen dem Antriebszapfen und einer den Antriebszapfen aufnehmenden zentralen Bohrung des Montiertellers eine axiale Schiebeverbindung, die beispielsweise als Nut und Federverbindung oder als Verzahnung ausgebildet sein kann, vorgesehen ist und daß der Montierteller einen zentralen Zapfen mit einem darauf axial bewegbaren Halteelement als Halteeinrichtung aufweist, und daß mindestens ein Mitnehmerzapfen mit einer Achse parallel zur Achse des zentralen Zapfens vorgesehen ist, wobei der zentrale Zapfen und der zumindest eine Mitnehmerzapfen in Wirkverbindung mit der Kraftfahrzeugfelge bringbar sind. Hierdurch wird, ohne Beschädigungsgefahr für die Felge, eine fixierte Mitnahme der Felge erreicht, die durch reinen Formschluß geschieht; der Kraftschluß durch die Halteeinrichtung dient lediglich dazu, eine konzentrische Anlage der einen Seite der Felge am Montierteller zu bewirken, ohne daß durch diesen Kraftschluß die auf den freien Felgenrand einwirkenden Kräfte mit auf den Montierteller übertragen werden müßten.

In Anspruch 3 wird eine Ausgestaltung des Reifenmontiergeräts mit einer Schiebeverbindung zwischen dem Umfang des Montiertellers und dem tellerförmigen Anstriebselement offenbart. Hierdurch wird ein problemloser Wechsel von Montiertellern ermöglicht. In einer weiteren Ausgestaltung ist vorgesehen, daß Spannpratzen des Antriebselements in Schlitze am Umfang des Montiertellers eingreifen. Damit kann ein Montierteller nach der Erfindung auf dem bereits vorhandenen Montierteller eines üblichen Reifenmontiergeräts mit dessen Pratzen befestigt werden, und zwar unabhängig davon, ob der bereits vorhandene Montierteller in horizontaler oder vertikaler Richtung ausgerichtet ist.

Zur weiteren Steigerung der sicheren Verbindung zwischen Montierteller und Antriebszapfen wird eine konische bzw. kegelige Verzahnung der beiden lösbaren Bauteile, Montierteller und Antriebszapfen, vorgeschlagen.

Gemäß Anspruch 7 ist ein Montierteller unter Schutz gestellt mit einem zentralen, sich vom Montierteller wegerstreckenden Zapfen zur Halterung der Felge, wobei der Montierteller Mitnahmeeinrichtungen trägt, welche mit den Radbolzenbefestigungslöchern oder Öffnungen der Felgenschüssel verschiedener Felgen in Eingriff gebracht werden können.

Die Felge, auf welche ein Reifen montiert werden soll, ist kraftschlüssig am Montierteller zentriert gehalten, während die Mitnahme durch eine die Felgenschulter und die Felgenhörner schonende Mitnahme über zumindest eine Formschluß-Mitnahmeeinrichtung geschieht. Dadurch, daß der Montierteller radial nach Außen sich erstreckende Aufnahmen für eine Mitnahmeeinrichtung besitzt, wird erfindungsgemäß erreicht, daß im Fall nichtzugänglicher Radbolzenbefestigungslöcher bzw. bei nicht Übereinstimmen der Radbolzenbefestigungslöcher mit den auf dem Montierteller angeordneten Aufnahmen ein einziger Mitnehmerzapfen im entsprechenden radialen Abstand mit einer Öffnung in der Felgenschüssel formschlüssig zusammenwirkt und hiermit eine Mitnahme der Felge in fixierter Lage zum Montierteller bewirkt. Eine derartige formschlüssige Mitnahme ist auch möglich, wenn bei Leichtmetallfelgen zur Zeiteinsparung bei der Montage und Demontage der Fahrzeugfelge auf den Montierteller lediglich mit einem Mitnehmerzapfen an den Verstrebungen in der Felgenschüssel die Felge ohne ihre fixierte Lage zum Montierteller verlassen zu können, mitgenommen werden soll, ohne daß durch die Radbolzenbefestigungslöcher Mitnahmezapfen mit dem Motierteller verbunden werden müssen.

Zur Erhöhung des Schutzes von lackierten oder polierten, aus Leichtmetallegierungen bestehenden Felgen, wird gemäß Anspruch 11 vorgeschlagen, daß alle Elemente des Montiertellers zum Schutz der mit ihren Oberflächen in Berührung kommenden Oberfläche der Kraftfahrzeugfelge eine Schutzauflage tragen.

Die Verbindung zwischen den Mitnehmerzapfen und dem Montierteller kann gemäß Anspruch 9 über schwalbenschwanzförmige Führungen erfolgen. Die Herstellung des Kraftschlusses zwischen dem am Montierteller angeordneten zentralen Schaft und dem Mittenloch der Felge kann über eine Klemmverbindung geschehen.

Gemäß der Erfindung trägt der Montierteller Gewindebohrungen für Mitnehmerzapfen, welche die Radbolzenbefestigungslöcher der Felge durchdringen und eine Reihe radial sich nach außen erstreckender Gewindebohrungen zur Aufnahme eines Mitnehmerzapfens, welcher eine Ausnehmung in der Felgenschüssel durchgreift.

Der in Anspruch 10 unter Schutz gestellte Montierteller zeichnet sich dadurch aus, daß zur direkten Verbindung des Montiertellers mit dem den Montierteller tragenden Antriebszapfen des Reifenmontiergeräts der Antriebszapfen des Reifenmontiergeräts eine Verzahnung trägt und der Montierteller im Bereich des zentralen Zapfens eine Sackbohrung mit einer Verzahnung trägt, und daß eine lösbare Schnappsicherung vorgesehen ist.

In der nachfolgenden Zeichnung wird die Erfindung näher erläutert.

Es zeigen:
- Figur 1: einen Montierteller mit auf diesem angeordneter Fahrzeugfelge, wobei der Montierteller über Spannpratzen mit dem Antriebselement eines nicht dargestellten Reifenmontiergeräts verbunden ist, im Schnitt.
- Figur 2: einen Montierteller, der mit dem Antriebszapfen eines sonst nicht dargestellten Reifenmontiergeräts verbunden ist, im Schnitt.
- Figur 3: eine Draufsicht auf einen Montierteller
- Figur 4: eine Draufsicht auf eine andere Ausführung eines Montiertellers
Bei der nachfolgenden Beschreibung werden die in den einzelnen Figuren auftretenden gleichen Bauteile mit den selben Bezugsziffern bezeichnet.

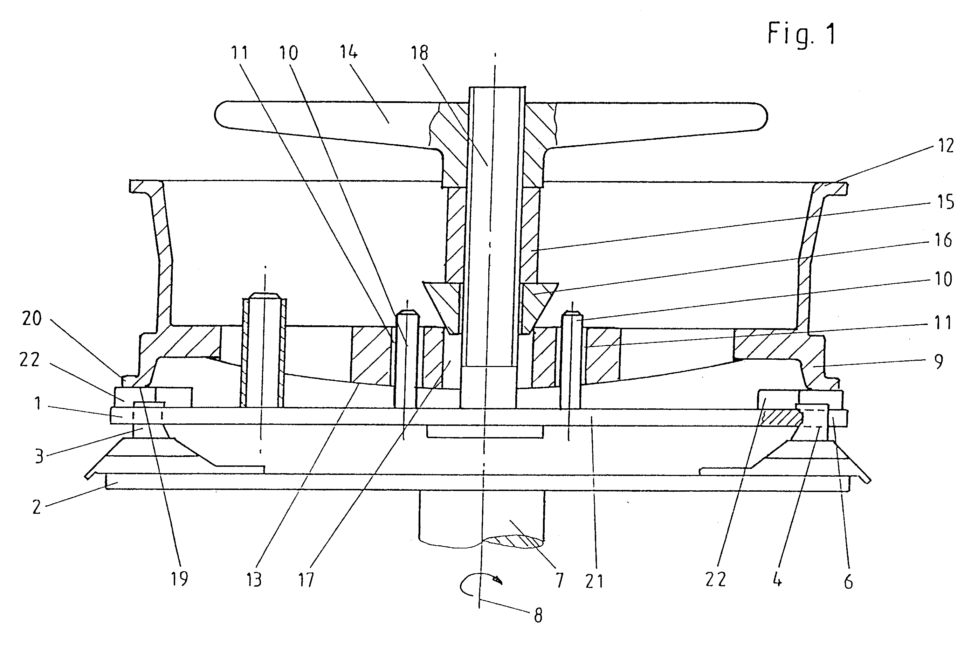

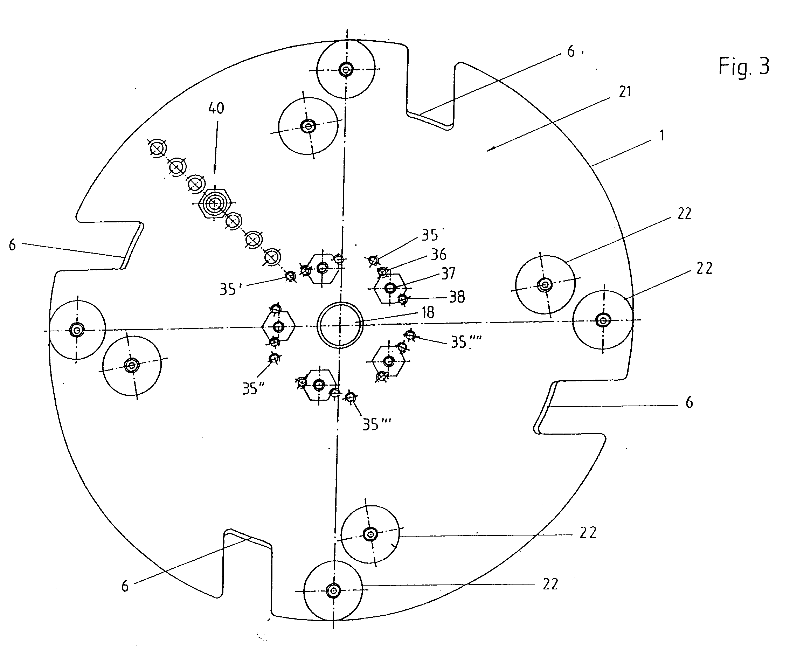

Gemäß Figur 1 wird ein Montierteller 1 von auf einem Grundmontierteller 2 angeordneten beweglichen Pratzen 3, 4 an Seinen Schlitzen 6 gehalten (vgl. hierzu auch Figur 3).

Der Grundmontierteller 2 ist mit einem nicht dargestellten Reifenmontiergerät verbunden und wird von diesem über einen Antriebszapfen 7 rotierbar angetrieben. Hierbei ist es gleichgültig, ob die Zapfenachse 8 in vertikaler oder horizontaler Richtung zeigt.

Gemäß Ausführungsbeispiel nach Figur 1 ist eine aus Leichtmetallegierung bestehende Felge 9 mit dem Montierteller 1 über Mitnehmerzapfen 10, welche Radbolzenbefestigungslöcher 11 der Felge 9 durchdringen, in ihrer Lage gegenüber dem Montierteller 1 unverrückbar fixiert. Diese Mitnehmerzapfen 10 ermöglichen es nun, daß bei der Montage oder Demontage eines Reifens über das im Betriebszustand innen liegende Felgenhorn, also auf das Kraftfahrzeug zuweisende Felgenhorn, auftretenden Kräfte nicht zu einer auch nur geringfügigen Verschiebung der Felge 9 gegenüber dem Montierteller 1 führen, welche zwangsläufig zu einer Beschädigung der nach Außen zeigenden Oberfläche 13 führen würde.

Um beim Festspannen der Felge 9 auf den Montierteller 1 über eine Mutter 14, ein Zwischenstück 15 und einen Konus 16 durch Verspannen des Mittenlochs 17 der Felge 9 mit Hilfe eines zentralen Zapfens 18 eine Beschädigung der außen liegenden Schulter 19 der Felge 9 oder des anderen umlaufenden Felgenhorns 20 zu vermeiden, sind an der der Felge 9 zuweisenden Oberfläche 21 des Montiertellers 1 Kunststoffscheiben 22 gemäß dem Ausführungsbeispiel nach Figur 1, vorgesehen.

Nach beendeter Reifenmontage über das Felgenhorn 12 der Felge 9 wird die Felge 9 durch Lösen der Mutter 14 entspannt, die Felge mit dem teilmontierten Reifen um 180° umgeschlagen, so daß das Felgenhorn 12 nunmehr zur Auflage auf den Kunststoffscheiben 22 kommt. Anschließend wird dann die Felge durch Anziehen der Mutter 14, jedoch ohne Zwischenstück 15 gegebenenfalls mit Konus 16, erneut verspannt. Die Mitnehmerzapfen 10 sind in ihrer Länge so bemessen, daß sie auch bei umgeschlagener Felge 9 die Radbolzenbefestigungslöcher 11 durchdringen, so daß auch in diesem Falle eine eindeutige Fixierung gewährt ist.

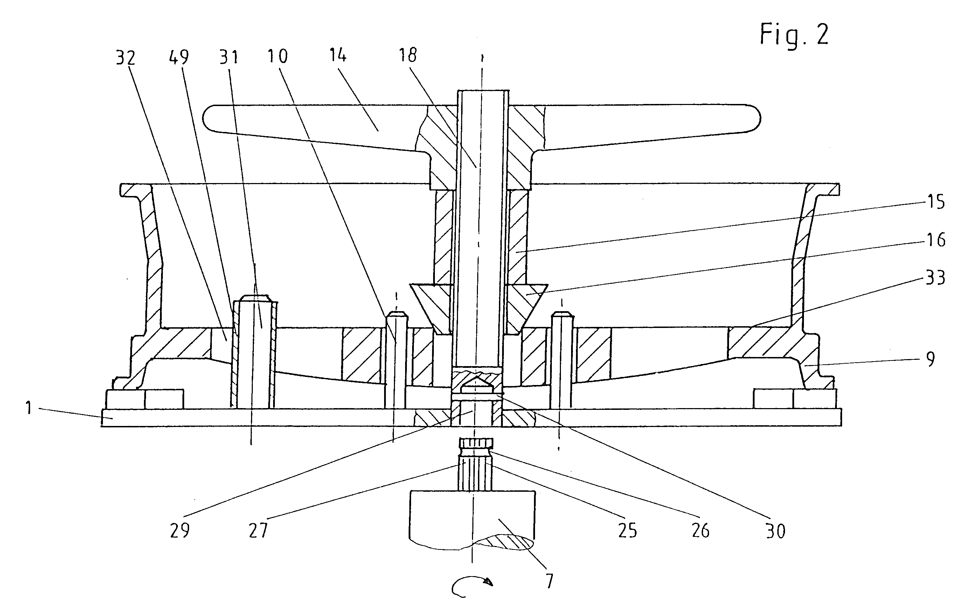

In Figur 2 wird die direkte Verbindung des Montiertellers 1 mit dem Antriebszapfen 7 des nicht dargestellten Reifenmontiergeräts beschrieben.

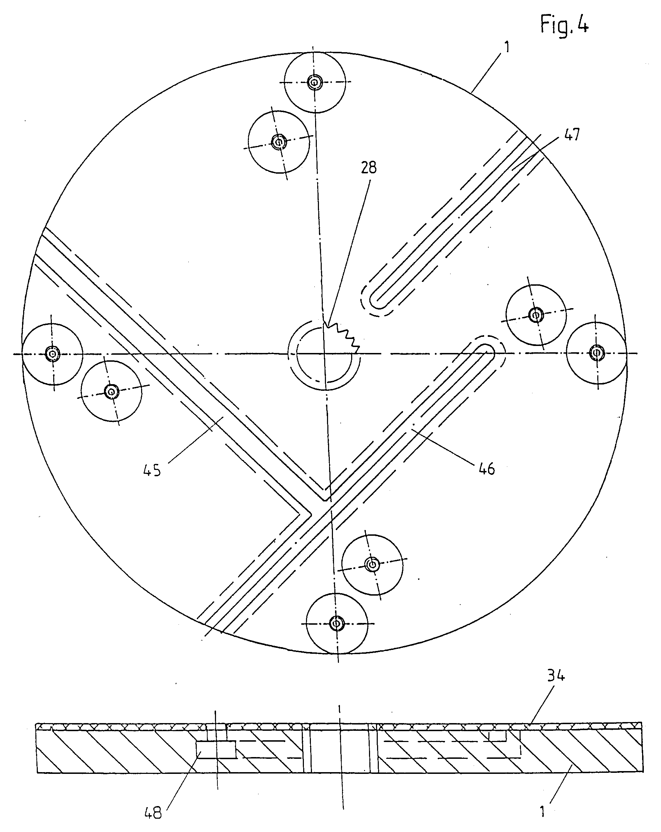

Der Antriebszapfen 7 trägt ein Kopfteil 25, welches mit einer umlaufenden Nut 26 versehen ist. Der Kopfteil 25 trägt weiter eine Außenverzahnung 27 an seinem Umfang, welche mit einer Innenverzahnung 28 (vgl. Figur 4) in dem Montierteller 1 beim Zusammenbau zusammenwirkt und somit die für eine Rotation erforderliche Kraftübertragung zuläßt.

Im Ausführungsbeispiel nach Figur 2 besitzt der zentrale Zapfen 18, der mit dem Montierteller verschraubt oder verschweißt sein kann, ein Sackloch 29, welches ebenfalls an seinem Umfang mit einer Innenverzahnung 28 versehen ist.

Die Arretierung der lösbaren Verbindung zwischen dem Kopfteil 25 des Antriebszapfens 7 des Reifenmontiergeräts mit dem Montierteller 1 einschließlich seiner Aufbauten geschieht durch einen Schnappverschluß, bei welchem in einer Durchgangsbohrung 30 ein federnder Stift eingelegt wird, der beim Einschieben des Kopfteils 25 in das Sackloch 29 zufolge seiner Federungseigenschaften in radialer Richtung ausweicht und bei Erreichen der umlaufenden Nut 26 in diese Nut einfällt und somit beide Teile unverrückbar zusammenhält. Bei einer Demontage des Montiertellers 1 vom Kopfteil 25 des Antriebszapfens 7 des Reifenmontiergeräts ist der Federstift lediglich aus der Durchgangsbohrung 30, welche sich im zentralen Zapfen 18 befindet, herauszunehmen. Hierzu kann der Federstift zweckmäßigerweise an einem Ende einen größeren Durchmesser besitzen, um leichter handhabbar zu sein.

Anhand der Figur 2, bei der die Arretierung der Felge 9 ebenfalls über die Mutter 14, das Zwischenstück 15 und den Konus 16 geschieht, wird die fixierte Mitnahme der Felge 9 durch einen Mitnehmerzapfen 31 bewirkt, der mit einer Speiche der Felge 9 in Wirkverbindung tritt. In diesem Fall sind die Mitnehmerzapfen 10, welche die Radbolzenbefestigungslöcher 11 durchdringen, nicht erforderlich. Die fixierte Mitnahme geschieht allein durch den Mitnehmerzapfen 31, der im Ausführungsbeispiel nach Figur 2 mit einer Speiche 32 der Felge 9 zusammenwirkt. Bei Felgen mit nicht gängigen Radbolzenbefestigungslöchern muß in keiner Weise eine neue Konfiguration der Mitnehmerzapfen 10 auf dem Montierteller 1 erstellt werden, um die Mitnehmerzapfen 10 in Wirkverbindung mit den nicht gängigen Radbolzenbefestigungslöchern der Felge zu bringen sondern es wird in diesem Falle durch den Mitnehmerzapfen 31, der eine Öffnung in der Radschüssel 33 der Felge 9 durchgreift, eine fixierte Mitnahme der Felge 9 bewirkt. Ein derartiges Mitnehmen bietet sich vor allem dann an, wenn es sich um Felgen verschiedener Hersteller für Kraftfahrzeuge handelt oder um Motorradfelgen oder um Felgen von Lastkraftwagen.

Anstelle des konzentrischen Festspannens der Felge 9 mit Hilfe der Mutter 14 und des zentralen, mit Gewinde versehenen Zapfens 18 kann auch jede andere Arretierungsart gewählt werden, beispielsweise kann anstelle des zentralen Zapfens 18 ein glatter Zapfen treten, der mit einer an die Stelle der Mutter 14 tretenden Klemmverbindung zusammenwirkt.

Die in Figur 3 dargestellte Draufsicht auf den Montierteller 1 stellt eine bevorzugte Ausführung des Montiertellers 1 dar, wenn dieser mit den beweglichen Pratzen 3, 4 (vgl.Figur 1) des bereits vorhandenen Reifenmontiergeräts verwendet wird. Die Kunststoffscheiben 22 sind auf der der Felge zuweisenden Oberfläche 21 des Montiertellers 1 so angeordnet, daß dort Felgen verschiedenen Durchmessers ohne Beschädigung aufspannbar sind. Anstelle dieser Kunststoffscheiben 22 kann jedoch auch ein glatter, abriebfester Belag 34 (vgl. Figur 4) die gesamte Oberfläche 21 des Montiertellers 1 überdecken. Damit wird der Einsatzbereich des Montiertellers 1 wesentlich erweitert.

In Figur 3 sind um den zentralen Zapfen 18 Gruppen von Aufnahmen in Form von Gewindebohrungen etwa kreisförmig angeordnet. Eine Gruppe der Aufnahmen wird mit 35, 36, 37 und 38 bezeichnet. Jede einzelne Aufnahme 35 oder 36 oder 37 oder 38 hat im Ausführungsbeispiel eine zugeordnete wietere Aufnahme in jeder der 4 weiteren Gewindebohrungsgruppen. Eine Aufnahme im Ausführungsbeispiel 35 wirkt beispielsweise mit den Aufnahmen 35', 35'', 35''', und 35'''' zusammen. Mit anderen Worten, es handelt sich hierbei um Fünflochfelgen, d. h., es sind für jede Felge 9 fünf Radbolzenbefestigungslöcher 11 vorgesehen. Im Ausführungsbeispiel wurden die gängigen Konfigurationen derartiger Radbolzenbefestigungslöcher benutzt, um die entsprechenden Aufnahmen 35, 36, 37, 38 und die hierzu entsprechenden Gewindebohrungen bereits auf dem Montierteller anzuordnen.

In der Draufsicht gemäß Figur 3 sind Aufnahmen 40 in Form einer Reihe sich radial nach außen erstreckender Gewindebohrungen erkennbar. Diese Gewindebohrungen dienen zur Aufnahme eines Mitnehmerzapfens 31, mit dem allein dann eine fixierte Mitnahem erfolgt. Beispielsweise bei abweichender Konfiguration der Radbolzenbefestigungslöcher, beispielsweise der Löcher einer Vierlochfelge, müssen diese nicht erneut in den Montierteller 1 eingearbeitet werden. Auch ist es möglich, zur Beschleunigung der Montage oder Demontage von Reifen auf Felgen auch anstelle der Aufnahmen 35 bis 38 und Entsprechende nur den Mitnehmerzapfen 31 in eine der Aufnahmen 40 entsprechend einzuschrauben.

Die in Figur 4 dargestellte Draufsicht auf den Montierteller 1 sowie der Schnitt durch den Montierteller 1 zeigen eine Ausführung des Montiertellers 1, bei der anstelle von Gewindebohrungen schwalbenschwanzförmige Schlitze 45, 46 vorgesehen sind, welche sich T-förmig schneiden und ein weiterer schwalbenschwanzförmiger Schlitz 47, der unter einem Winkel von 45° sich radial nach Außen erstreckt. Der weitere schwalbenschwanzförmige Schlitz 47 ist der Ersatz für die in Figur 3 dargestellten Aufnahmen 40 (Reihe von Gewindebohrungen). Hiermit wird es bei Verwendung eines Mitnehmers mit einem als Schwalbenschwanz ausgebildeten Ende ermöglicht, jede beliebige Öffnung einer Felge in fixierte Lage zum Montierteller zu bringen und somit ihre fixierte Mitnahme ohne eine Beschädigung zu ermögliche, wenn über eine zentrale Arretierung, wie in den Figuren 1 und 2 dargestellt, die Anlagen der Felge auf dem Montierteller bewirkt wird. Im Querschnitt des Montiertellers 1 gemäß Figur 4 ist ein Schlitzkanal 48 des schwalbenschwanzförmigen Schlitzes 45 dargestellt. In diesem Schlitzkanal 48 kann ein Mitnehmerzapfen mit Schwalbenschwanzfuß beliebig bewegt werden und somit beispielsweise auf ein entsprechendes Radbolzenbefestigungsloch einer Vier- oder Fünflochfelge eingestellt werden. Im Ausführungsbeispiel gemäß Figur 4 wurden lediglich zwei schwalbenschwanzförmige Schlitze 46 dargestellt, die T-förmig sich unter einem Winkel von 90° treffen. Es ist teilweise bereits ausreichend, wenn lediglich zwei Mitnehmerzapfen in zwei Radbolzenbefestigungslöcher eingreifen und somit eine fixierte Mitnahme der Felge 9 bewirken. Es kann jedoch durch Erweiterung der schwalbenschwanzförmigen Schlitze 45, 46 auf mehrere solcher Schlitze auch erreicht werden, jede beliebige Art von Felgen an jedem Radbolzenbefestigungsloch fixiert mitzunehmen.

Die Innenverzahnung 28 in der Zentralbohrung des Montiertellers 1 dient zur direkten Verbindung des Montiertellers 1 entweder mit dem Antriebszapfen 7 des Reifenmontiergeräts direkt oder zur Verbindung des Kopfteils 25 des Antriebszapfens 7 mit dem Montierteller 1.

Der im Querschnitt gemäß Figur 4 dargestellte abriebfeste Belag 34 dient auch als Umhüllung 49 (vgl. Figur 2) des Mitnehmerzapfens 31. Ebenso können die Mitnehmerzapfen 10 mit einer abriebfesten und glatten Umhüllung versehen sein.

## Patentansprüche

1. Verfahren zur Montage oder Demontage von Kraftfahrzeugfelgen (9) auf einem Reifenmontiergerät unter Verwendung eines mit einem rotierbaren Antriebselement des Reifenmontiergeräts drehfest verbindbaren Montiertellers (1), auf dem die Kraftfahrzeugfelgen (9) gehalten werden, bei dem der Montierteller (1) und das Antriebselement über eine Schiebeverbindung lösbar verbunden werden, dadurch gekennzeichnet, daß die Kraftfahrzeugfelge (9) über eine Halteeinrichtung mit einer Seite koaxial in Verlängerung der Antriebselement- und Montiertellerachse zentriert in Anlage am Montierteller (1) gehalten wird und daß die Lage der Felge (9) auf dem Montierteller (1) über zumindest eine von zwei Mitnahmeeinrichtungen (10,35,36,37,38; 31,40) fixiert wird.

2. Reifenmontiergerät mit einem demontierbaren rotierbaren Montierteller (1) mit einer Halterung für Kraftfahrzeugfelgen zur Montage von Reifen oder deren Demontage mit einem als Antriebszapfen (7) ausgebildeten Antriebselement, bei dem eine axiale Schiebeverbindung (27,28) zwischen dem Antriebszapfen (7) und einer den Antriebszapfen aufnehmenden zentralen Bohrung (29) des Montiertellers (1) vorgesehen ist, bei dem der Montierteller (1) einen zentralen Zapfen (18) mit einem darauf axial bewegbaren Halteelement als Halteeinrichtung aufweist, bei dem zumindest ein Mitnehmerzapfen (10,31) mit einer parallel zur Achse des zentralen Zapfens (18) verlaufenden Achse vorgesehen ist, wobei der zentrale Zapfen (18) und der zumindest eine Mitnehmerzapfen (10,31) in Wirkverbindung mit der Kraftfahrzeugfelge (9) bringbar sind.

3. Reifenmontiergerät mit einem demontierbaren rotierbaren Montierteller (1) mit einer Halterung für Kraftfahrzeugfelgen zur Montage von Reifen oder deren Demontage mit einem tellerförmig ausgebildeten Antriebselement (2), bei dem eine Schiebeverbindung zwischen dem Umfang des Montiertellers (2) und dem tellerförmigen Antriebselement (2) vorgesehen ist, bei dem der Montierteller (1) einen zentralen Zapfen (18) mit einem darauf axial bewegbaren Haltelement als Halteeinrichtung aufweist, bei dem zumindest ein Mitnehmerzapfen (10,31) mit einer parallel zur Achse des zentralen Zapfens (18) verlaufenden Achse vorgesehen ist, wobei der zentrale Zapfen (18) und der zumindest eine Mitnehmerzapfen (10,31) in Wirkverbindung mit der Kraftfahrzeugfelge (9) bringbar sind.

4. Reifenmontiergerät nach Anspruch 3, dadurch gekennzeichnet, daß Spannpratzen (3,4) des Antriebselements (2) in Schlitze (6) am Umfang des Montiertellers (1) eingreifen.

5. Reifenmontiergerät nach Anspruch 2, dadurch gekennzeichnet, daß die axiale Schiebeverbindung eine Innenverzahnung (28) einer zentralen Bohrung (29) des Montiertellers (1) und eine Außenverzahnung (27) des Antriebszapfens (7) umfaßt und daß eine lösbare Schnappsicherung (26,30) nach dem Ineinanderschieben von Montierteller (1) und Antriebszapfen (7) einfällt.

6. Reifenmontiergerät nach Anspruch 5, dadurch gekennzeichnet, daß die Außenverzahnung (27) kegelig und die Innenverzahnung (28) konisch verläuft.

7. Rotierbarer Montierteller (1) mit einer Halterung für Kraftfahrzeugfelgen (9) zur Montage von Reifen oder deren Demontage, bei dem ein zentraler Zapfen (18) mit einem darauf axial bewegbaren Halteelement als Halteeinrichtung vorgesehen ist, bei dem Aufnahmen (35,36,37,38) für eine Mitnahmeeinrichtung (10,35,36,37,38), welche mit Radbolzenbefestigungslöchern (11) verschiedener Felgen (9) übereinstimmen, vorgesehen sind und bei dem radial sich nach außen erstreckende Aufnahmen (40) für eine weitere Mitnahmeeinrichtung (31,40) vorgesehen sind.

8. Rotierbare Montierteller nach Anspruch 7, dadurch gekennzeichnet, daß die Aufnahmen (35,36,37,38) der Mitnahmeeinrichtung (10,35,36,37,38) als Gewindebohrungen für zumindest einen, ein Radbolzenbefestigungsloch (11) durchgreifenden mit Gewinde versehenen Mitnehmerzapfen (10) ausgebildet sind und die Aufnahme (40) der weiteren Mitnahmeeeinrichtung als Gewindebohrung für einen, eine Öffnung (32) der Felge (9) durchgreifenden mit Gewinde versehenen Mitnehmerzapfen (31) ausgebildet ist.

9. Rotierbare Montierteller nach Anspruch 7, dadurch gekennzeichnet, daß die Aufnahmen der Mitnahmeeinrichtungen Schlitze (45,46,47) mit schwalbenschwanzförmigem Querschnitt sind, in denen Mitnehmerzapfen mit schwalbenschwanzförmigen Ende verschiebbar sind.

10. Rotierbare Montierteller nach einem oder mehreren der vorhergehenden Ansprüche, dadurch gekennzeichnet, daß der Montierteller (1) im Bereich des zentralen Zapfens (18) eine Sackbohrung mit einer der Außenverzahnung (27) des Antriebszapfens (7) eines Reifenmontiergeräts zugeordneten Innenverzahnung (28) trägt und daß eine lösbare Schnappsicherung (26,30) vorgesehen ist.

11. Rotierbare Montierteller nach einem oder mehreren der vorhergehenden Ansprüche, dadurch gekennzeichnet, daß alle Elemente (1,10,16,31) des Montiertellers (1) zum Schutz der mit ihren Oberflächen in Berührung kommenden Oberfläche der Felge (9) eine Schutzauflage (22,34,49) tragen.

12. Rotierbarer Montierteller nach einem oder mehreren der vorhergehenden Ansprüche, dadurch gekennzeichnet, daß der Montierteller (1) Schlitze (6) an seinem Umfang aufweist, in die Spannpratzen (3,4) des Antriebselements (2) eines Reifenmontiergeräts anordenbar sind.

## Claims

1. Procedure for the fitting or removal of passenger car rims (9) on a tyre changer using a fitting plate (1) designed for a torsionally resistant connection with a rotating drive element of the tyre changer on which the passenger car rims (9) are retained, procedure in which the fitting plate (1) and the drive element are connected separably by means of a sliding connection, characterized in that the passenger car rim (9) via a fixing device is retained centered with the one side coaxially as prolongation of the driving element and fitting plate axis contacting the fitting plate (1) and that the position of the rim (9) on the fitting plate (1) is fixed by at least one of the two driving elements (10, 35, 36, 37, 38; 31, 40).

2. Tyre changer with a demountable, rotatable fitting plate (1) with a holding device for passenger car rims for the fitting of tyres and their removal, with a drive element designed as head journal (7) where an axial sliding device (27,28) is provided between the head journal (7) and a central borehole (29) in the fitting plate (1) which is to accommodate the head journal, where the fitting plate (1) is provided with a central journal (18) with a holding element on it which is axially movable as holding device where at least one driving journal (10,31) is provided with an axis parallel to the axis of the central journal (18) where the central journal (18) and at least one driving journal (10,31) can be brought in effective connection with the passenger car rim (9).

3. Tyre changer with a demountable, rotatable fitting plate (1) with a holding device for passenger car rims for the fitting of tyres and their removal, with a plate-shaped drive element (2) where a sliding device is provided between the circumference of the fitting plate (1) and the plate-shaped drive element (2) where the fitting plate (1) provides a central journal (18) with an axially movable holding element on it as holding device where at least one driving journal (10,31) is provided with an axis parallel to the axis of the central journal (18) where the central journal (18) and at least one driving adapter (10,31) can be brought in effective connection with the passenger car rim (9).

4. Tyre changer as per claim 3 characterized in that the chuck jaws (3,4) of the driving element (2) engage in slots (6) on the circumference of the fitting plate (1).

5. Tyre changer as per claim 2 characterized in that the axial sliding connection includes both an internal toothing (28) of a central borehole (29) of the fitting plate (1) and an external toothing (27) of the head journal (7) and that a separable snap connection (26,30) engages after sliding of fitting plate (1) and head journal (7).

6. Tyre changer as per claim 5 characterized in that the external toothing (27) is conic and the internal toothing (28) is conic.

7. Rotable fitting plate (1) with a holding device for passenger car rims (9) for the fitting of tyres and their removal, where a central journal (18) with an axially movable holding element on it as holding device is provided, where accommodations (35,36,37,38) for driving elements (10,35,36,37,38) are provided which correspond to wheel stud fixing holes (11) of different rims (9) and where accommodations (40) radially expanding to the exterior are provided for additional driving elements (31,40).

8. Rotable fitting plate as per claim 7 characterized in that the accommodations (35,36,37,38) of the driving elements (10,35,36,37,38) are designed as threaded boreholes for at least one threaded driving journal (10) passing a wheel stud fixing hole (11) and that the accommodation (40) of another driving element is designed as threaded borehole for a threaded driving journal (31) passing the opening (32) of the rim (9).

9. Rotable fitting plate as per claim 7 characterized in that the driving element accommodations are slots (45,46,47) with dovetailed sections in which driving journals with dovetailed ends can be slided.

10. Rotable fitting plate as per one or more of the preceding claims characterized in that the fitting plate (1) in the area of the central journal (18) is provided with a pocket borehore with an internal toothing (28) which corresponds to the external toothing (27) of the head journal (7) of a tyre changer and that a separable snap connection (26,30) is provided.

11. Rotable fitting plate as per one or more of the preceding claims characterized in that all elements (1,10,16,31) of the fitting plate (1) are provided with a protective cover (22,34,49) to protect the surface of the rim (9) coming into contact with the surfaces of these elements.

12. Rotable fitting plate as per one or more of the preceding claims characterized in that the fitting plate (1) is provided with slots (6) in its circumference in which chuck jaws (3,4) of the driving element (2) of a tyre changer can be arranged.

## Revendications

1. Procédé de montage et de démontage de jantes (9) de véhicules automobiles sur un appareil de montage de pneumatiques en utilisant un plateau de montage (1) pouvant être relié de façon fixe en rotation à un élément d'entraînement rotatif de l'appareil de montage de pneumatiques, plateau sur lequel sont maintenues les jantes (9) de véhicules automobiles, procédé dans lequel le plateau de montage (1) et l'élément d'entraînement sont reliés de façon dégageable par l'intermédiaire d'une liaison coulissante, caractérisé en ce que la jante (9) de véhicule automobile est maintenue centrée en appui sur le plateau de montage (1) par un dispositif de retenue par un côté coaxialement en prolongement de l'axe de l'élément d'entraînement et du plateau de montage, et en ce que la position de la jante (9) sur le plateau de montage (1) est fixée par au moins l'un de deux dispositifs d'entraînement (10, 35, 36, 37, 38; 31, 40).

2. Appareil de montage de pneumatiques comprenant un plateau de montage rotatif démontable (1) avec une fixation pour des jantes de véhicules automobiles en vue du montage de pneumatiques ou de leur démontage et un élément d'entraînement constitué sous forme d'un tourillon d'entraînement (7), dans lequel est prévu une liaison axiale coulissante (27, 28) entre le tourillon d'entraînement (7) et un alésage central (29) du plateau de montage (1) qui reçoit le tourillon d'entraînement, dans lequel le plateau de montage (1) comprend un tourillon central (18) avec sur lui un élément de retenue mobile en direction axiale et constituant un dispositif de retenue, dans lequel au moins un tourillon d'entraînement (10, 31) est prévu avec un axe orienté parallèlement à l'axe du tourillon central (18), le tourillon central (18) et le tourillon d'entraînement (10, 31) au moins pouvant être amené en liaison active avec la jante (9) du véhicule automobile.

3. Appareil de montage de pneumatiques comprenant un plateau de montage (1) rotatif et démontable avec une fixation pour des jantes de véhicules automobiles en vue du montage de pneumatiques ou de leur démontage et comprenant un élément d'entraînement (2) constitué sous forme d'un plateau, dans lequel est prévue une liaison coulissante entre la périphérie du plateau de montage (2) et l'élément d'entraînement en forme de plateau (2), dans lequel le plateau de montage (1) comprend un tourillon central (18) avec sur lui un élément de retenue mobile axialement et constituant un dispositif de retenue, dans lequel au moins un élément d'entraînement (10, 31) est prévu avec un axe orienté parallèlement à l'axe du tourillon central (18), le tourillon central (18) et le tourillon d'entraînement (10, 31) au moins pouvant être amené en liaison active avec la jante (2) du véhicule automobile.

4. Appareil de montage de pneumatiques selon la revendication 3, caractérisé en ce que des griffes de serrage (3, 4) de l'élément d'entraînement (2) pénètrent dans des fentes (6) prévues sur la périphérie du plateau de montage (1).

5. Appareil de montage de pneumatiques selon la revendication 2, caractérisé en ce que la liaison coulissante en direction axiale comprend une denture interne (28) d'un alésage central (29) du plateau de montage (1) et une denture externe (27) du tourillon d'entraînement (7), et en ce qu'une fixation par déclic dégageable (26, 30) s'enclenche après coulissement du plateau de montage (1) et du tourillon d'entraînement (7) l'un dans l'autre.

6. Appareil de montage de pneumatiques selon la revendication 5, caractérisé en ce que la denture externe (27) est de forme effilée et la denture interne (28) est conique.

7. Plateau de montage rotatif (1) comportant une fixation pour des jantes (9) de véhicules automobiles en vue du montage de pneumatiques ou de leur démontage, dans lequel est prévu un tourillon central (18) avec sur lui un élément de retenue mobile axialement en tant que dispositif de retenue, dans lequel sont prévus des logements (35, 36, 37, 38) pour un dispositif d'entraînement (10, 35, 36, 37, 38), qui coïncident avec des trous de fixation de boulons de roue (11) de jantes diverses (9), et dans lequel sont prévus des logements (40) s'étendant radialement vers l'extérieur pour un autre dispositif d'entraînement (31, 40).

8. Plateau de montage rotatif selon la revendication 7, caractérisé en ce que les logements (35, 36, 37, 38) du dispositif d'entraînement (10, 35, 36, 37, 38) sont constitués sous forme d'alésages taraudés pour au moins un tourillon d'entraînement (10) muni d'un filetage et traversant un trou de fixation de boulon de roue (11), et le logement (40) de l'autre dispositif d'entraînement est constitué sous forme d'un alésage taraudé pour un tourillon d'entraînement (31) muni d'un filetage et traversant une ouverture (32) de la jante (9).

9. Plateau de montage rotatif selon la revendication 7, caractérisé en ce que les logements des dispositifs d'entraînement sont constitués par des fentes (45, 46, 47) à section en queue d'aronde, dans lesquelles peuvent se déplacer des tourillons d'entraînement dont l'extrémité est en forme de queue d'aronde.

10. Plateau de montage rotatif selon l'une ou plusieurs des revendications précédentes, caractérisé en ce que le plateau de montage (1) comporte dans la région du tourillon central (18) un alésage borgne comprenant une denture interne (28) associée à la denture externe (27) du tourillon d'entraînement (7) d'un appareil de montage de pneumatiques, et en ce qu'il est prévu une fixation par enclenchement dégageable (26, 30).

11. Plateau de montage rotatif selon l'une ou plusieurs des revendications précédentes, caractérisé en ce que tous les éléments (1, 10, 16, 31) du plateau de montage (1) comportent une couche de protection (22, 34, 49) destinée à la protection de la surface de la jante (9) qui vient en contact avec leurs surfaces.

12. Plateau de montage rotatif selon l'une ou plusieurs des revendications précédentes, caractérisé en ce que le plateau de montage (1) comporte sur sa périphérie des fentes (6) dans lesquelles peuvent être disposées des griffes de serrage (3, 4) de l'élément d'entraînement (2) d'un appareil de montage de pneumatiques.
